# EUROPEAN PATENT APPLICATION

(11) **EP 4 571 702 A1**
(43) Date of publication of application: **18.06.2025**
(21) Application number: 24213129.0
(22) Date of filing: 14.11.2024
(51) Int. Cl.: G08G 1/01, G06N 3/045, G08G 1/16

(54) **TRANSFORMER-BASED AI PLANNER FOR LANE CHANGING ON MULTI-LANE ROAD**

(30) Priority: 15.12.2023 US 202318541363
(71) Applicant: Volkswagen Aktiengesellschaft, 38440 Wolfsburg (DE)
(72) Inventor: Salih, Safin, Belmont, 94002 (US); Shamsoshoara, Alireza, San Mateo, 94401 (US)

(57) **Abstract**

Approaches, techniques, and mechanisms are disclosed relating to transformer-based AI systems for vehicle operations. A plurality of input feature vectors in a latent space of three dimensions is determined from a plurality of physical object observations derived from sensor-acquired data and non-sensor-acquired data collected for a vehicle. The three dimensions include a time dimension, a feature dimension and an embedding size dimension. A plurality of attention heads implemented in one or more transformer networks of an artificial intelligence (AI) based system is applied to the input feature vectors in the latent space to generate attention scores forming a plurality of attention layers. One or more target predictions relating to navigation operations of the vehicle are generated based at least in part on the attention scores in the plurality of attention layers. A vehicle propulsion operation is performed in accordance with the one or more target predictions.

## Description

### TECHNICAL FIELD

Embodiments relate generally to vehicle systems, and, more specifically, to transformer-based AI planner for lane changing on multi-lane road.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Lane changing on multilane roads - including highways, freeways, expressways, streets, avenues, parking lots, trails, and other areas that vehicles can navigate - is known to be a major, if not the largest, contributor to traffic accidents. Lane configurations and conditions, traffic conditions, weather, different driver behaviors, etc., vary greatly and change rapidly on the multilane roads from place to place and from time to time.

In-vehicle autonomous navigation and driver assistance functionalities may be deployed with vehicles to support automated or assisted lane changing operations. However, lane changing decisions made by these functionalities may or may not be optimal. Different drivers or operators of the vehicles may exhibit different specific driving behaviors or styles.

For example, some drivers may tend to make fast decisions, whereas some other drivers may tend to be more circumspect in carrying out lane changing. Hence, lane changing operations or decisions made by the autonomous navigation and driver assistance functionalities may not be deemed to be optimal, efficient and/or safe from the perspectives of the operators or drivers of the vehicles with many different driving styles or habits.

### BRIEF DESCRIPTION OF THE DRAWINGS

The present disclosure is illustrated by way of example, and not by way of limitation, in the figures of the accompanying drawings and in which like reference numerals refer to similar elements and in which:
FIG. 1 illustrates an example framework 100 for supporting or performing AI-based vehicle operations;
FIG. 2A and FIG. 2B illustrate example system configurations of an AI-based system for supporting or performing AI-based vehicle operations; FIG. 2C illustrates example attention switching or swapping across time and feature dimensions of a latent space;
FIG. 3A illustrates an example predicted distance matrix; FIG. 3B illustrates an example car network graph; FIG. 3C and FIG. 3D illustrate example trajectory/position related graphs;
FIG. 4 illustrates an example process flow; and
FIG. 5 is block diagram of a computer system upon which embodiments of the disclosure may be implemented.

### DETAILED DESCRIPTION

In the following description, for the purposes of explanation, numerous specific details are set forth in order to provide a thorough understanding of the present disclosure. It will be apparent, however, that the present disclosure may be practiced without these specific details. In other instances, well-known structures and devices are shown in block diagram form in order to avoid unnecessarily obscuring the present disclosure.

Embodiments are described herein according to the following outline:
1.0. General Overview
2.0. Structural Overview
   2.1. Planner Input Collector
   2.2. AI Tactical Planner
   2.3. Multi-Head Attention
   2.4. MLP Networks
   2.5. Travel Assistant
3.0. Functional Overview
   3.1. Lane Data Collection
   3.2. Object Data Collection
   3.3. Latent Space
   3.4. Ouput Features
   3.5. Attention Layer
   3.6. Attention Swapping
   3.7. Car Network
   3.8. Trajectory/Position
4.0. Example Process Flows
5.0. Implementation Mechanism-Hardware Overview
6.0. Extensions and Alternatives

### 1.0. GENERAL OVERVIEW

In autonomous driving, many other approaches (e.g., CNN mainly approaches, etc.) would seek to regulate ego vehicle behaviors, for example, through imitation learning that refines actions to match desired or expert driving behaviors.

However, relying solely on the desired or expert driving behaviors for error correction or training purposes would not result in AI models learning actual driving processes in which most if not all driving behaviors are neither desired nor expert like. Such AI models might find patterns and relations in practice accidentally match the desired or expert behaviors/actions learned in training. Nevertheless, these AI models would not be able to generalize in a robust manner to unseen environments or situations that might be very different from the patterns or relations learned in training.

In comparison, an AI-based system as described herein can be trained with a wide variety of simulated or actual observations or training data instances that include both expert and non-expert like driving behaviors.

In addition, the trained AI-based system deployed with a vehicle in the field and configured with optimized operational parameter values such as weights and biases can implement or operate with (self-attention) transformer neural networks to generate attention scores and/or soft weights based at least in part on realtime or near realtime observations generated with a sensor stack deployed with the vehicle.

The transformer neural networks in the AI-based system as described herein can be trained or applied to pay, switch, or swap attention along one or both time and feature axes/dimensions of a latent space comprising input features or embeddings derived from observations, sensory and/or non-sensory data.

Unlike other approaches such as CNN only or CNN mainly approaches, the self-attention mechanism of the transformers in the AI-based system as described herein does better in context understanding among the observations or the input features or embeddings derived therefrom. The attention scores and/or soft weights generated by the self-attention mechanism can account for (e.g., subtle, complex, etc.) relationships between all input features at the same time and/or across different time points. The self-attention mechanism can relatively efficiently uncover or respond to long-range dependencies of observation-related information from temporal capturing of the sensory and/or non-sensor data relating to the ego vehicle as well as surrounding vehicles and objects. As a result, both contextual and temporal relationships in the observation, input features or embeddings can be better tracked and captured as compared with the other approaches.

Since the problem of overtaking on multi-lane roads and changing lanes highly depends on temporal traffic related information in time including observations, input features or embeddings relating to other (dynamic) vehicles or objects, the attention switching or swapping techniques implemented with the AI-based system as described herein can learn both the context and temporal patterns among the ego vehicle and other vehicles/objects, taking in account road specifications like speed limit, etc.

Complex, contextual, temporal or latent relations across different types of features, across different time points, etc., in the observations, input features or embeddings uncovered in realtime operations of the AI-based system can be used to generate target predictions and control the operations of the vehicle.

The AI-based system as described herein can also be trained or applied to generate different types of target predictions. These target predictions may include, but are not necessarily limited to only, lane change commands (e.g., command to change to left lane, command to change to right lane, command to stay on the same lane, etc.), vehicle velocity, and/or velocity pose predictions some or all of which can be directly used with low-level vehicle controllers to control the vehicle's navigation or propulsion operations.

As an example, observations relating to positions, speeds/velocities and associated lanes or lane IDs of other vehicles, speed limit(s), the ego vehicle's speed/velocity and/or other attributes/behaviors over time can be tracked or considered to generate time varying input features or embeddings to be processed by the AI-based system to better understand or learn how, for instance, the speed limit or the ego vehicle's speed can influence the lane change for other dynamic vehicles and how all of those can bring a safe and reasonable lane change for the ego vehicle as future forecasting or target predictions.

In some operational scenarios, a travel assistant module or subsystem operating in or with the AI-based system may implement or perform (main or primary) tasks to predict future lane changes (or commands thereof) and/or perform autonomous lane changing without the driver's signaling or threshold or configuration.

For example, the travel assistant may receive two target prediction inputs: velocity predictions and lane change command predictions. Future lane predictions can be used to control the ego vehicle regarding lane changing by passing the future lane change predictions or predicted value to the travel assistant to determine or perform specific lane changes as predicted. Future velocity predictions can be used to control the speed of the ego vehicle by passing the future velocity predictions or predicted value to the travel assistant to determine or perform corresponding low-level vehicle control operations including but not necessarily limited to only lane changing. (The driver may still monitor and observe (or even veto) the performance of autonomous vehicle operations inside the vehicle while the AI-based system is suggesting, proposing or carrying out the lane change.)

To provide relatively high awareness of the driving environment to an agent implemented in the AI-based system to control the vehicle or to a user/operator of the vehicle, the AI-based system may implement or perform (auxiliary or non-primary) tasks to generate some of the target predictions directed to producing or rendering a car network graph depicting up to a maximum number of vehicles surrounding the (ego) vehicle and/or the vehicle's trajectory within a time window into the future.

The AI-based system or module including but not limited to lane changing subsystem or sub-module therein can still consider or ensure the safety of the ego vehicle in autonomous or assisted driving operations based on how the AI models implemented in the system were trained on collected training data. In addition, the AI-based system can make predictions or decisions informed by relatively accurate and responsive environmental understandings achieved at runtime using attention switching or swapping across time and feature dimensions.

By implementing, learning, fusing and/or integrating different (main and/or auxiliary) tasks, the AI models in the system as described herein can be trained or applied to learn or uncover relatively useful and crucial features of the latent space including the input features or embeddings derived from observations, sensory and/or non-sensory data; to learn or uncover relatively refined representations (e.g., with attention scores and/or attention layers generated from base encoders or attention heads of the transformers, etc.) and dynamics of traffic related information relating to the (ego) vehicle; and to enable relatively smart or accurate (e.g., navigation related, etc.) decisions and actions for autonomous driving, as compared with other approaches relying on imitation learning.

Approaches, techniques, and mechanisms are disclosed relating to transformer-based AI systems for vehicle operations. A plurality of input feature vectors in a latent space of three dimensions is determined from a plurality of physical object observations derived from sensor-acquired data and non-sensor-acquired data collected for a vehicle. The three dimensions include a time dimension, a feature dimension and an embedding size dimension. A plurality of attention heads implemented in one or more transformer networks of an artificial intelligence (AI) based system is applied to the input feature vectors in the latent space to generate attention scores forming a plurality of attention layers. One or more target predictions relating to navigation operations of the vehicle are generated based at least in part on the attention scores in the plurality of attention layers.

In other aspects, the disclosure encompasses computer apparatuses and computerreadable media configured to carry out the foregoing techniques.

### 2.0. STRUCTURAL OVERVIEW

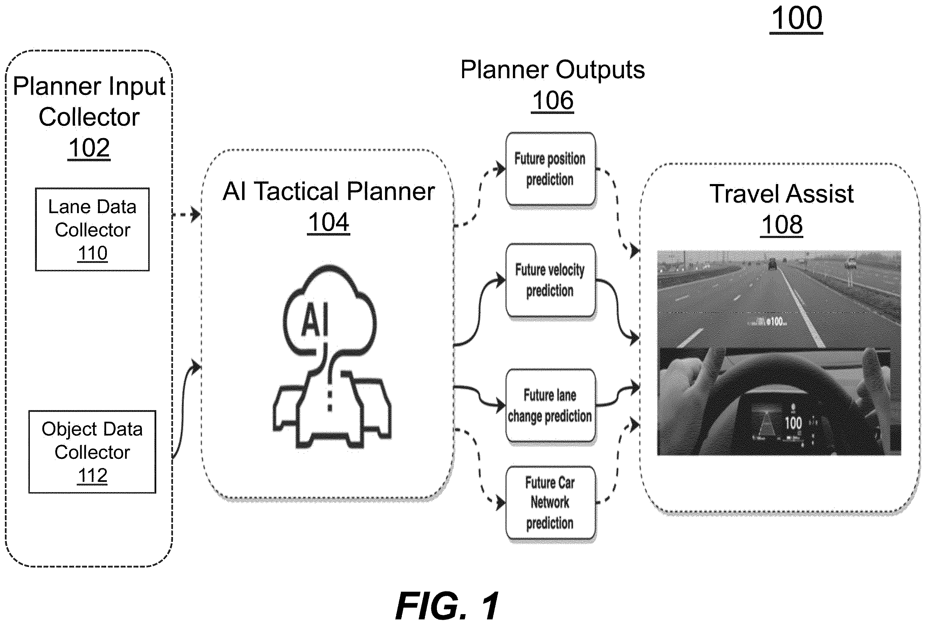

FIG. 1 illustrates an example framework 100 for supporting or performing AI-based vehicle operations, which may include, but not necessarily limited to only, lane changing operations in multi-lane road scenarios. The framework (100) comprises an (AI tactical) planner input collector 102, an AI tactical planner 104, a travel assist subsystem 108, etc. The framework 100 or subsystem(s) therein may be implemented with some or all of: AI techniques, machine learning or ML techniques, non-AI non-MI, techniques, a combination of different types of computing techniques, etc. Each subsystem, block, module, device, system, etc., illustrated in the framework 100 may be collectively or individually implemented with one or more computing devices that comprise any combination of hardware and software configured to implement the various logical components described herein. For example, the one or more computing devices may include one or more memories storing instructions for implementing the various components described herein, one or more hardware processors configured to execute the instructions stored in the one or more memories, and various data repositories in the one or more memories for storing data structures utilized and manipulated by the various components.

In an AI model training phase, the AI tactical planner 104 or AI model(s) or artificial neural networks (ANN) therein can be trained - using training data comprising training instances with training planner input data and ground truths - to generate optimized values for AI model operational parameters such as weights and/or biases. The AI tactical planner 104 generates (training) planner outputs 106 in the form of a plurality of (training) targets predicted by the AI tactical planner 104 based on planner inputs in the training planner input data. Prediction errors between the (training) targets predicted by the AI tactical planner 104 and the ground truths may be computed or measured using one or more loss functions (e.g., objective functions, error functions, etc.). These prediction errors may be used to adjust - e.g., through back propagation with gradients computed from the prediction errors, etc. - the (optimized or to-be-optimized) values of the AI model operational parameters until the prediction errors are minimized and/or until all the training instances are applied to train the AI tactical planner 104.

In an AI model application or inference phase, (an instance of) the AI tactical planner 104 is configured with the optimized or trained values for the AI model operational parameters and deployed with a vehicle for interaction with (an instance of) the planner input collector 102 and (an instance of) the travel assist subsystem 108 in the vehicle. The AI tactical planner 104 generates planner outputs 106 in the form of a plurality of targets predicted by the AI tactical planner 104 based on planner inputs generated or provided by the planner input collector 102.

In some operational scenarios, the planner outputs 106 (or predicted targets) include future trajectory/position predictions for the vehicle, future velocity predictions for the vehicle, future lane change predictions, (current and/or future) car network predictions, etc.

### 2.1. PLANNER INPUT COLLECTOR

The planner input collector 102 of the framework 100 may operate with a sensor stack deployed with the vehicle (also referred to as "ego") and collect/generate (e.g., realtime, near realtime, within a relatively strict budget of time latency, etc.) lane data in the same scene or on the same road section on which the vehicle or ego is currently traveling and (e.g., realtime, near realtime, within a relatively strict budget of time latency, etc.) object data as well as object data relating to dynamic and/or static objects around the vehicle in the same scene or on the same road section.

The planner input collector 102 includes a lane data collector 110 that operates some or all of the sensor stack with the vehicle and collects/generates the lane data. Additionally, optionally or alternatively, the planner input collector 102 includes an object data collector 112 that operates some or all of the sensor stack with the vehicle and collects/generates the object data.

In some operational scenarios, the lane data and/or object data may be generated or collected or derived from sensory or non-sensory data or observations made with the sensor stack deployed with the vehicle. The lane data and/or object data represent history information of all vehicles and/or objects in the same scene or on the same road section traveled by the vehicle/ego up to the latest time or the current wall clock time. The lane data and/or object data or data items or instances therein may be indexed as or associated with previous and/or present timestamps, respectively. The lane data and/or object may be maintained or saved or cached/buffered in memory. At any given time, the lane data and/or object data may cover a minimum time window such as the past five (5) seconds.

The lane data may include (e.g., a time sequence of, observations or measurements of, covering the last five seconds, etc.) lane identification (ID) and segmentation data of the road section.

The object data may include one or more object data portions relating to one or more objects. Each object data portion in the one or more object data portions may correspond or relate to a respective object in the one or more objects. The one or more objects include (a) a specific object representing the vehicle or ego and (b) zero or more objects representing other vehicles and/or other objects around the vehicle or ego.

An object data portion corresponding to an object as described herein may include, but are not necessarily limited to only, (e.g., a time sequence of, observations or measurements of, covering the last five seconds, etc.) velocities of the object, lane ID(s) or lane ID associations of the object, positions (x, y) of the object with respect to the ego vehicle, the length of the object or vehicle, etc.

The collected lane data and object data may be processed, provided or passed by the planner input collector 102 to the AI tactical planner 104 or the AI models and/or artificial neural networks (e.g., multi-layer perceptron (MLP) networks, etc.) therein to perform or generate future (e.g., position, velocity, lane change, car network, etc.) predictions.

### 2.2. AI TACTICAL PLANNER

The AI tactical planner 104 of the framework 100 generates prediction targets as the planner outputs 106 based on the collected lane data and object data.

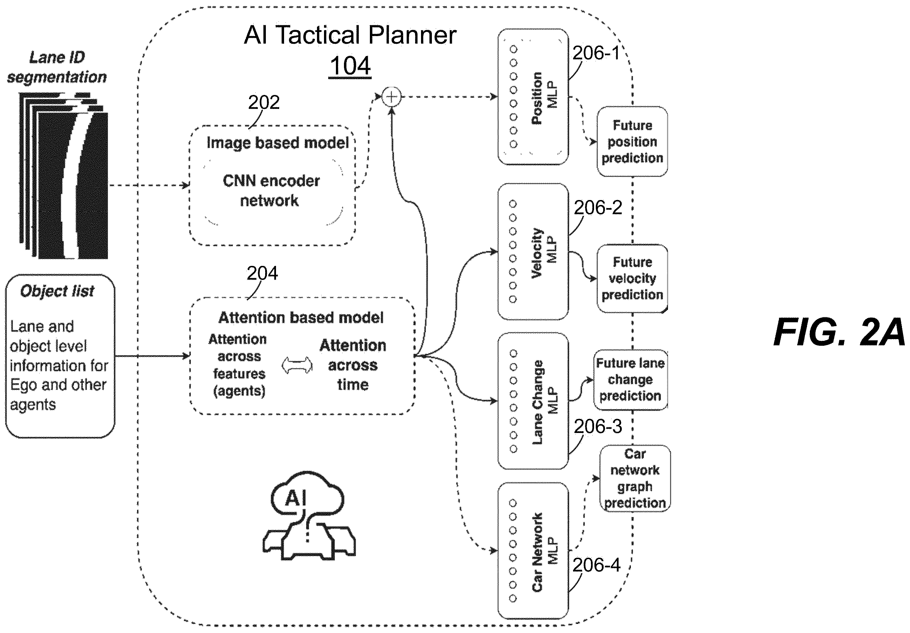

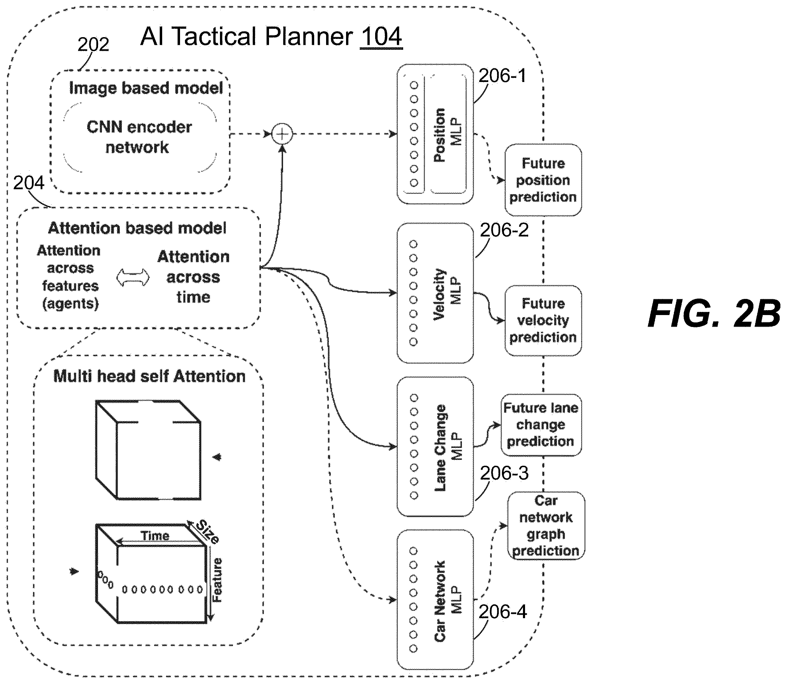

In example system configurations as illustrated in FIG. 2A and FIG. 2B, the AI tactical planner 104 includes a first AI model (referred to as an image-based model 202) implemented with one or more convolutional neural networks (CNNs) and a second AI model (referred to as an attention-based model 204) implemented with one or more artificial neural networks representing one or more multi-head (e.g., self, etc.) attention transformers or transformer neural networks.

Detection of different lanes on the road section may be performed by the lane data generator 110 and/or the image-based AI model 202 and/or (e.g., convolutional, deep, etc.) neural networks therein operating in parallel with the attention-based AI model or the transformer.

In a model training phase, one or both of the attention-based model 204 or the image-based model 202 may be trained based on ground truth data collected in training data - which may include, but is not necessarily limited to only, (e.g., millions of, etc.) training data instances derived from simulation, from traffic and/or sensor data collected from actual vehicle operations, etc. In some operational scenarios, both AI models 202 and 204 along with the MLP networks (or blocks) 206 may be trained as an end-to-end model with a single loss function.

As illustrated in FIG. 2A and FIG. 2B, outputs generated by the attention-based model 204 or the transformer may be used as first input (features) or passed to multi-layer perceptron (MLP) networks 206-2, 206-3 and 206-4 - each of which MLP networks includes its own MLP layer(s) of multiple neurons denoted as small circles in FIG. 2A and FIG. 2B - to respectively generate predictions for future velocities of the vehicle, future lane changes for the vehicle, and (e.g., current, future, etc.) car networks surrounding the vehicle on the road section. Additionally, optionally or alternatively, the outputs generated by the attention-based model 204 or the transformer may be concatenated with outputs generated by the image-based model 202 or the CNN encoder network. These concatenated outputs can then be used as second input (features) or passed to an MLP network 206-1 (which includes one or more MLP layers of multiple neurons denoted as small circles in FIG. 2A and FIG. 2B) to generate predictions for future trajectories or positions of the vehicle.

### 2.3. MULTI-HEAD ATTENTION

Multi-head (self) attention networks (or blocks) and feedforward blocks (or networks) may be implemented as a (e.g., core, main, etc.) part of the attention-based model 204 or the transformer (neural network) in the AI tactical planner 102 to generate some or all of the AI model output features, which are in turn used by the MLP networks (or block) 206 for generating different prediction targets relating to vehicle trajectory/position, velocity, lane change, car network, etc.

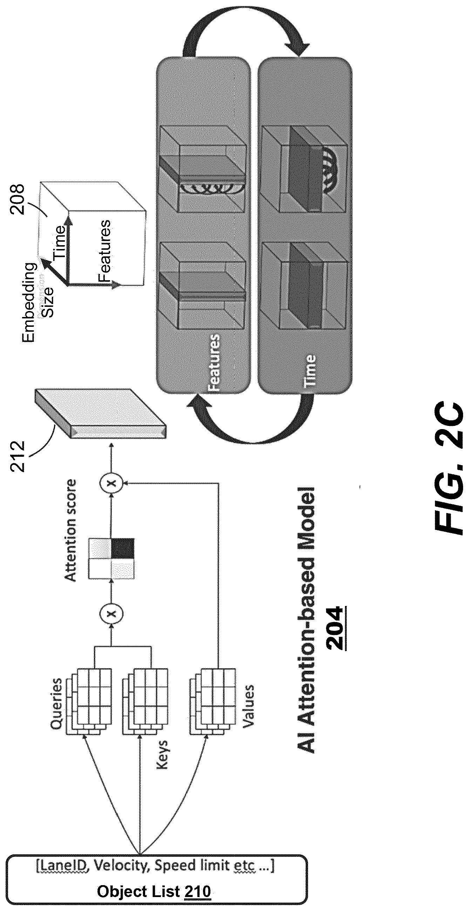

The multi-head attention (networks/blocks) may include, but are not necessarily limited to only, a plurality of attention heads each of which represents a query (Q), key (K) and value (V) (attention) subnetwork as illustrated in FIG. 2C.

Through these attention heads or QKV (attention) subnetworks (or sub-blocks), the multi-head attention (networks/blocks) in the attention-based model 204 or the transformer (neural network) in the AI tactical planner 102 can process input vectors or embeddings represented in a latent space 208 of FIG. 2C.

The latent space - containing the input vectors or embeddings to be processed by the attention heads of the multi-head attention (networks/blocks) - may be represented by a rectangle with three dimensions of feature, time, and embedding size (or agent dimension). In some operational scenarios, the rectangle may be normalized or renormalized into a cube after all the dimensions of the latent space 208 are normalized/renormalized to the same value range such as [0, 1], [0, 100] or [0, 255].

Under techniques as described herein, the attention heads or QKV subnetworks can operate in parallel in realtime to pay attention across different features represented in the latent space 208, to pay attention across different time (points) covered or represented in the latent space 208, to pay attention across different correlations or combinations of feature and time covered or represented in the latent space 208, etc.

### 2.4. MLP NETWORKS

As shown in FIG. 2A and FIG. 2B, the AI tactical planner 104 of FIG. 1 may include a plurality of MLP networks/blocks 206, which receives output features from the attention-based model 204 and/or the image-based model 202 as inputs and generate respective target predictions as outputs.

Each MLP network/block as described herein comprises one or more fully connected layers (each neuron in a subsequent layer is fully connected to all outputs from neurons of a previous layer). The neurons of the MLP network/block may be configured with non-linear activation function.

In a model training or fitting stage/phase, the MLP network/block may be trained to approximate any (e.g., linear or non-linear, analytical or non-analytical, complex or hidden, etc.) corresponding function or mapping that implicitly exists between target predictions (of a respective type) and input features received by the MLP network/block.

In a model application or inference stage/phase, the trained MLP network/block operating with optimized operational parameter values such as weights and/or biases generated in the model training or fitting stage/phase may be deployed with the vehicle or ego as described herein to generate target predictions in the field (e.g., during an actual autonomous or assisted driving session, etc.).

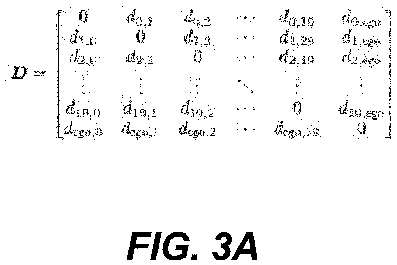

The output of the trajectory/position MLP network 206-1 may include a plurality of (e.g., five, etc.) future (vehicle or ego) position predictions. The output of the velocity MLP network 206-2 may include a plurality of (e.g., five, etc.) future (vehicle or ego) velocity predictions. The output of the lane change MLP network 206-3 may include a plurality of (e.g., five, etc.) future lane change commands for the vehicle or ego. In some operational scenarios, these predications may be for a time window (e.g., 2.5 seconds, 5 seconds, etc.) into the future. The output of the car network MLP network 206-6 may include a plurality of nearby vehicles (or cars or trucks or other types of vehicles) represented in a (e.g., 21 × 21, etc.) matrix where each matrix element is a (realtime or near realtime) distance between each pair of vehicles among all the vehicles in the surrounding of the vehicle/ego, as illustrated in FIG. 3A.

### 2.5. TRAVEL ASSISTANT

Under techniques as described herein, a vehicle such as an electric vehicle operating on a multi-lane road or road section may be equipped or deployed with computer-implemented travel assist features, for example implemented with an AI-based travel assistant (computer-implemented subsystem) 108 as illustrated in FIG. 1.

In some operational scenarios, the travel assistant 108 - which may be alternatively referred to as a travel assist module/subsystem or an advanced driver-assistance system or ADAS - includes an adaptive cruise controller (ACC) or module, a lane keeping assistant (LKA) or module, a lane change assistant (LCA) or module, and so on. Some or all of these processing blocks, modules, etc., implemented in or with the computer-implemented travel assistant 108 can access or use target predictions generated by the AI tactical planner 104 in realtime operations.

The target predictions used by the travel assistant 108 may be made by the trained AI models of the AI tactical planner 104 based on input features, embeddings, vectors, etc., extracted from image or physical sensor-generated data or inputs collected from a physical and/or image sensor stack deployed with the vehicle or ego. The sensor stack may include, but is not necessarily limited to only, any, some or all of: RGB or other image cameras, LIDARs, RADARs, cameras in front, radars in front and rear, blind-spot sensors, ultra-sonic sensors for surroundings, etc.

The ACC of the travel assistant 108 may be used to maintain or keep a specific speed of the vehicle/ego as intended or specified by the driver (or user) of the vehicle and to adjust the speed of the vehicle based on or in response to what the driver set in or for the vehicle. The ACC can take into account the current traffic flow on the multi-lane road or road section to avoid a collision with another vehicle in the front of the vehicle. Observations may be made by the AI-based system or a data collector (e.g., the planner input collector 102 of FIG. 1, the object data collector 112 of FIG. 1, etc.) therein with respect to positions, lane IDs, distances and/or velocities in relation to the ego vehicle. If that other vehicle in the front slows down, the AI-based system or the ACC can operate to control vehicle propulsion operations of the ego vehicle to slow down the vehicle correspondingly to maintain or keep a safe distance from the other car. Once it is safe to do so, the vehicle may be controlled or assisted by the ACC to accelerate to the specific speed which was set by the driver.

The LKA of the travel assistant 108 may be used to operate with the AI tactical planner 104 to analyze input images acquired by cameras deployed with the vehicle to detect the lane in which the vehicle is moving and to maintain or keep the vehicle in the lane. In the absence of a lane change command, if the vehicle drifts from the center of the lane, the LKA can operate with relatively low-level vehicle navigation or propulsion control features of the vehicle to steer or move the vehicle back to the center of the lane. The LKA can be implemented to follow curvatures of the multi-lane road or road section up to a maximum curvature level or value.

The (LCA of the travel assistant 108 can be used to (e.g., automatically, manually, etc.) improve the performance of lane changing for the vehicle or driver. In some operational scenarios, the LCA therein can support lane change operations manually with user signaling, user handling or user intervention. For example the driver may (e.g., manually, etc.) trigger a (e.g., left, right, etc.) lane change signal, the LCA can operate with the AI tactical planner 104 to monitor surrounding lanes - in reference to the lane on which the vehicle travels - and other vehicles therein and determine whether it is safe in terms of speed or collision (likelihood) to carry out a specific (e.g., left, right, etc.) lane change as requested by the driver with the lane change signal. In response to determining that it is safe to do so, the LCA can start to steer the vehicle and (e.g., gradually, with a safety margin, etc.) move the vehicle to the requested lane by the driver. Otherwise, in response to determining that it is not safe to do so, the LCA can reject the lane change signal or request from the driver.

In some operational scenarios, the LCA of the travel assistant 108 can operate with the AI tactical planner 104 to perform or cause to perform lane change operations automatically with no or little user signaling, user handling or user intervention. The AI tactical planner 104 and the travel assistant 108 can operate to - for example, automatically with no or little user input from the driver or user of the vehicle - generate lane change predictions. The AI generated lane change predictions can be used by the vehicle or the travel assistant 108 therein to perform corresponding lane changes as specified in the lane change predictions with no or little human interaction.

### 3.0. FUNCTIONAL OVERVIEW

In an embodiment, some or all techniques and/or methods described below may be implemented using one or more computer programs, other software elements, and/or digital logic in any of a general-purpose computer or a special-purpose computer, while performing data retrieval, transformation, and storage operations that involve interacting with and transforming the physical state of memory of the computer.

### 3.1. LANE DATA COLLECTION

As illustrated in FIG. 1 and FIG. 2A, the planner input collector 102 or the lane data collector 110 therein can generate or collect lane data (denoted as "lane ID segmentation" in FIG. 2A). The collected lane data is received as input by the image-based model 202 or the CNN encoder network used to implement the image-based model 202.

The collected lane data may be, but is not necessarily limited to only, any, some or all of: realtime or near realtime acquired lane images such as front view images generated by camera(s) deployed with the vehicle, lane information or observations extracted from the realtime or near realtime acquired lane images, lane identification (ID) segmentation images that explicitly identify lanes and their spatial locations in relation to the road section, images that identify lanes and their spatial locations in relation to a (e.g., earth stationary, etc.) spatial coordinate system, etc. Some of these images may be simulation and/or real world images, bird-eye-view (BEV) images, images imported or received from an image or BEV reconstruction module or subsystem operating in conjunction with the planner input generator 102 and/or the AI tactical planner 104.

In the model application or inference phase, some or all of the acquired lane images, lane information or observations extracted from the acquired lane images, lane ID segmentation images, BEV images, etc., may be generated in realtime or near realtime within a relatively strict time budget of a plurality of milliseconds or nanoseconds by an in-vehicle system deployed in the vehicle or ego.

The collected lane data - which is received as input by the image-based model 202 or the CNN encoder network - may be first packaged, coded, included, and/or ordered, into one or more sequences of consecutive or temporally ordered lane ID segmentation images. These images may be alternatively referred to as (lane ID segmentation) image frames, masks, or observations.

Each lane ID segmentation image in sequences of lane ID segmentation images may correspond or relate to a respective time point in a plurality of consecutive or temporally ordered time points covering a time interval such as a driving session, the last five seconds, etc. The lane ID segmentation image may represent a semantic image in which different lanes of the road section as seen by the vehicle are explicitly marked, masked, delineated, and/or demarcated, with their corresponding lane IDs respectively.

As an example, one or more front view cameras (e.g., physical or image sensors such as radar, LIDAR, infrared or visible light image sensors, etc.) of the vehicle may be used to acquire raw images or observations that are subsequently processed by the lane data collector 110 of the planner input collector 102 into semantic images of lane IDs. These semantic images can then be represented or included in the sequences of lane ID segmentation images received as input by the image-based model 202 or the CNN encoder network.

### 3.2. OBJECT DATA COLLECTION

As illustrated in FIG. 1 and FIG. 2A, the planner input collector 102 or the object data collector 112 therein can generate or collect object data (denoted as "object list" in FIG. 2A). The collected object data is received as input by the attention-based model 204 or the transformers (or transformer neural networks) used to implement the attention-based model 204.

The collected object data or list may include, but is not necessarily limited to only, any, some or all of: object data portions relating or corresponding to the vehicle or ego, other (non-ego) vehicles around the vehicle or ego on the same road section, other dynamic and/or static nonvehicle objects on the same road section, etc.

More specifically, the object data or list may include physical or image sensor-based observations acquired, generated, determined, aggregated, and/or analyzed, with a group of different (observation) agents operating with the planner input collector 102, the lane data collector 110 or the object data collector 112. Some or all of these agents may be implemented as a part of the planner input collector 102, the lane data collector 110 or the object data collector 112.

In some operational scenarios, each of the vehicle/ego and other vehicles/objects in the same scene or road section around the vehicle/ego may be designated to be observed by a respective agent among all the agents. A vehicle or object as described herein may be referred to as, or represented with, an agent - that is designated to observe the vehicle or object and generate observations or input features (e.g., latent features, embeddings, etc.) to be received by the AI models.

These agents monitor or track objects relating to the road section through physical or image sensors deployed with the vehicle. In some operational scenarios, some or all of these agents can determine, observe, or access (e.g., realtime, current, near realtime, within a relatively strict budget of time latency, etc.) map data, vehicle location, lane configuration, road section properties or characteristics, (car or truck) speed limit(s) derived from map data and/or sensor-stack based observations, lane specific restrictions, etc.

For example, one or more first agents in the group of agents may be specifically used or implemented to monitor or track the vehicle or ego. The first agents may generate sensory or non-sensory data or observations for the vehicle or ego in the object data or list for any given time or time point in a plurality of time points covering a time window such as the last five seconds. In the meantime, other agents in the group of agents may also be used to concurrently monitor or track other vehicles or objects and generate other sensory or non-sensory data or observations for the other vehicles or objects in the object data or list for the given time or time point.

The observations made by these agents through sensory or non-sensory data may include, but are not necessarily limited to only, any, some or all of: lane ID(s), velocity or velocities, speed limit(s), etc. of the (ego) vehicle and/or other vehicles and/or other objects, etc. Some of these objects tracked with the sensor stack deployed in the vehicle or ego may be non-vehicular including but not limited to any, some or all of: pedestrians, cyclists, skate boarders, animals, trees, dividers, curbs, obstacles, road hazards, etc.

Some of these observations may be raw or directly from a sensor, whereas some of these observations may be derived from processing the raw sensory data. For example, one or more radars can be included in the sensor stack and used to detect objects near the vehicles or ego. The respective distances and/or directions - in relation to the vehicles or ego - of the radar-detected objects may be determined or derived from processing the raw radar data using one or more computer vision techniques.

The object list or data - as created, derived or generated from the sensory or non-sensory data and/or observations - may include a list of (e.g., positional, lane, etc.) data values for up to a maximum total number of (e.g., 20, etc.) vehicles/objects near the vehicle/ego within a maximum radius (e.g., 100 meters, etc.). If there are fewer vehicles/objects near the vehicle or ego, then their corresponding data values in the list may be set to default values such as zero (0).

### 3.3. LATENT SPACE

Some or all these (agent) observations included as the agents' sensory or non-sensory data in the object data or list may be translated, converted, pruned, transformed, normalized, and/or flattened, by the planner input collector 102 and/or the AI tactical planner 104 into numeric representations (e.g., in combination with their respective positional encoding values, etc.) - which may be referred to as embeddings - forming the latent space 208 of FIG. 2C.

More specifically, the agent observations captured in the object data or list are converted into the embeddings, which are numeric valued vectors suitable as input to the transformers. The embeddings or vectors may be of an equal length (or size/dimension) referred to as "embedding size" or "agent dimension" of the latent space 208.

By way of illustration, in the previous example, the observations made by the first agents in the group of agents for the given time or time point (or time step) may include observations of lane ID, velocity, speed limit, etc., relating to or associated with the vehicle or ego or the road section the vehicle or ego travels on. Similarly, the other observations made by the other agents in the group of agents for the given time or time point (or time step) may include other observations of lane ID, velocity, speed limit, etc., relating to or associated with the other objects in addition to the vehicle or ego.

These (agent) observations made by the group of agents for the given time or time point may be translated, converted, pruned, transformed, normalized, and/or flattened, by the planner input collector 102 and/or the AI tactical planner 104 into numeric representations or embeddings for the given time or time point in the latent space 208.

For example, the first agents' observations for the given time or time point may be translated, converted, pruned, transformed, normalized, and/or flattened, into a (numeric valued) vector for the given time or time point. Similarly, the other agents' observations for the given time or time point may be translated, converted, pruned, transformed, normalized, and/or flattened, into other (numeric valued) vectors for the given time or time point.

All the vectors for the given time or time point - as derived from the observations of some or all the agents in the group of agents - may be collected into a (numeric valued) matrix. Hence, for the plurality of times or time points, a plurality of matrixes may be generated or derived from vectors respectively generated or derived for the plurality of times or time points from some or all observations of some or all the agents in the group of agents for the plurality of times or time points. The plurality of matrixes may be stacked sequentially in a temporal order in a time window such as a five-second time window to form a rectangle or cube - the latter if dimension sizes of the latent space 208 are all normalized or equalized to the same value range such as [0, 1], [0, 100], etc. - represented by the latent space 208.

The time dimension of these (agent) observations may be preserved or mapped into a time dimension in the latent space 208 as illustrated in FIG. 2C.

Dimensions across different agents or different types of observations of each individual agent may be concatenated, combined and/or flattened - as a part of translation, conversion, pruning, transformation and/or normalization operations performed by the planner input collector 102 and/or the AI tactical planner 104 - into the embeddings (or vectors/matrices) with a relatively small number of dimensions in the latent space 208 such as a single dimension referred to as a feature dimension in the latent space 208.

In other words, the agent observations such as sensory or non-sensory data may be of a relatively large number of dimensions including dimensions across different vehicles or objects, across different types of vehicle or object observed properties/characteristics, and/or across different types of sub-observations (e.g., lane ID, distance, position, direction, velocity, etc.). These observations can be used to generate, extract and/or flattened into, (feature) vectors or embeddings with the relatively small number of dimensions such as the feature dimension of the latent space 208 as illustrated in FIG. 2C.

As illustrated in FIG. 2C, in addition to the time and feature dimensions, the latent space 208 or the rectangle/cube also has an "embedding size" dimension, which represents sizes or lengths of embeddings or vectors extracted or derived from corresponding agent observations. The latent space 208 of FIG. 2C may represent a derived (representational) space that models (e.g., useror sensor- perceivable, etc.) observations of the world around the vehicle or ego, for example with a lower dimensionality as compared with the observations.

### 3.4. OUPUT FEATURES

The attention-based model 204 may be specifically configured or implemented to use the embeddings in the latent space 208 as input to generate output (features), which are inputted to - or which form combinations with second output (features) of the image-based model 202, which are then inputted to - the MLP networks 206 (e.g., 206-1 through 206-4, etc.).

More specifically, at or for a given time or time point, an output of the attention-based model 204 serves as an input for the same time point to the velocity MLP network 206-2, the lane change MLP network 206-3, and the car network MLP network 206-4. The output of the attention-based model 204 at or for the given time may be represented with an overall feature vector (latent) which may be hidden to a user or operator (e.g., driver, passenger, etc.) of the vehicle.

At or for the same given time or time point, an output of the attention-based model 204 may be concatenated with a second output of the image-based model 202 (e.g., outputted from one or more CNNs therein, etc.). The concatenation of the output of the attention-based model 204 and the second output of the image-based model 202 serves as an input for the same given time point to the trajectory/position MI,P network 206-1. Like the output of the attention-based model 204, the second output of the image-based model 202 may be represented with a (second) feature vector which may be hidden to a user or operator (e.g., driver, passenger, etc.) of the vehicle, as these models 202 and 204 and the MLP networks 206 may be trained or applied as a single end-to-end architecture.

### 3.5. ATTENTION LAYER

As noted, the attention-based model 204 of FIG. 2A or FIG. 2B may be implemented with a self-attention transformer such as a multi-head (self) attention (network/block). The multi-head attention may include a plurality of attention heads directed to pay attention to or across different dimensions of the latent space 208 or different correlations or combinations of input features or embeddings represented in the latent space 208.

In a model application or inference stage/phase, after the model is trained, each attention head of the multi-head attention can operate in parallel with other attention head(s) and calculate respective (soft) weights for input features or embeddings represented in the latent space 208 at runtime.

As these weights are contemporaneously generated, changed or adjusted at runtime in response to input features/embeddings generated from realtime or near realtime observations in the scene or on the road section on which the vehicle or ego is traveling, the attention-based model 204 can respond to realtime traffic conditions and flows relatively timely, accurately and responsively, for example as compared with other approaches (e.g., recurrent neural networks, etc.) that may use time sequential processing.

In addition, each attention head of the multi-head attention can itself process a relatively large number of input features/embeddings across different features at the same or different time points in parallel. Regardless of whether how significantly different these features and/or time points may be, the (soft) weights representing (e.g., hidden or latent) correlations between different features at the same or different time points can be relatively efficiently and accurately generated by the attention head, as compared with other approaches (e.g., recurrent neural networks, etc.) that may favor more recent or like features or times.

As a result, output features produced by the attention-based model 204 or the multi-head attention can be used to enable the MLP networks 206 to make relatively accurate target predictions in a relatively timely manner.

FIG. 2C illustrates example operations of each attention head in some or all the attention heads in the (AI) attention-based model 204. The attention head may include three (e.g., trained, to be trained, etc.) fully connected neural network or sub-networks respectively representing query (Q), key (K) and value (V) sub-networks/sub-blocks. As used herein, a fully connected neural network or sub-network refers to a network or sub-network in which each neuron in a subsequent layer of the network or sub-network is connected to all neurons or inputs in a previous layer in the neural network or sub-network.

The embeddings in the latent space 208 may be provided as input to each of the Q, K and V sub-networks/sub-blocks, for example, in three parallel input streams each of which includes the same input matrix. The matrix includes a plurality of vectors generated or derived from the embeddings of the latent space 208. Hence, each of the Q, K and V sub-networks/sub-blocks may include a receives the same plurality of vectors (or rows of the matrix) generated or derived from the embeddings in the latent space 208.

In response to receiving the input streams with the same matrix, the Q, K and V subnetworks/sub-blocks of the attention head generates Qw, Kw and Vw weights, respectively. Qw (for each individual vector in the plurality of vectors as a query vector) and Kw (for all individual vectors in the plurality of vectors as key vectors) are combined, for example through a Softmax function, into attention scores. These attention scores are then combined or multiplied with Vw (for all individual vectors in the plurality of vectors as value vectors) to generate soft weights represented in an attention layer 212.

For a given or each input vector (in the plurality of input vectors) as a query vector, a Qw weight may be computed for that query vector. The query vector may be compared with all input vectors as key vectors to determine attention scores between the query vector and all the key vectors, by way of combining (e.g., via dot product, etc.) the Qw weight computed by the Q subnetwork/sub-block with a plurality of Kw weights computed by the K sub-network/sub-block for the plurality of input vectors. Correlations or inter-relationships between the query vector and the key vectors can be evaluated by applying a Softmax function to the dot product of the Qw weight and Kw weights, thereby determining the attention scores.

In addition, the Vw weights may be computed for all the input vectors in the plurality of input vectors. These Vw weights may assign higher values to more important input vectors and lower values to less important input vectors. These Vw weights may be combined or multiplied with the attention scores into the soft weights which pay attention to not only the correlations or inter-relationships between or among the input features but also individual relative importance of the input vectors.

These soft weights computed with the Q, K and V sub-networks/sub-blocks may be provided as output features of the attention-based model 204. These output features can then be used as input to, or received by, feed-forward networks/blocks such as the MLP networks 206-2 through 206-4. The feed-forward networks/blocks or the MLP networks 206-2 through 206-4 combine all soft weights in all attention layers as respectively generated by all the attention heads of the attention-based model 204 (e.g., in parallel, etc.) and generate respective target predictions relating to vehicle velocity, lane change, car network, etc. Additionally, optionally or alternatively, the output features of the attention-based model 204 can be combined with additional output from the image-based model 202 to generate different input to be received by a feed-forward network/block or the MLP network 206-1 for generating additional target predictions relating to vehicle trajectory/position.

### 3.6. ATTENTION SWAPPING

In some operational scenarios, different attention heads may be implemented in the attention-based model 204 or the transformer network/block therein to pay attention across features, time, a combination of feature and time, etc.

For example, first input vectors/rows in a first input matrix may be generated from the embeddings constituting the latent space 208 through combining, collapsing or flattening along the time dimension. Each first input vector/row in the first input matrix may be generated for a respective feature (type) at different times or timepoints (e.g., within a time window, for the past five seconds, etc.) covered in the latent space 208. The first input vectors/rows in the first input matrix may be used by a first attention head that pays attention to or across different features or different feature types (e.g., different vehicles/objects, derived from different sensory or non-sensory data, etc.).

Likewise, second input vectors/rows in a second input matrix may be generated from the same embeddings constituting the latent space 208 through combining, collapsing or flattening along the feature dimension. Each second input vector/row in the second input matrix may be generated for a respective time or time point at different features or feature types (e.g., different vehicles/objects, derived from different sensory or non-sensory data, etc.) represented in the latent space 208. The second input vectors/rows in the second input matrix may be used by a second attention head that pays attention to or across different times or different time points.

Hence, the attentions paid or attention scores computed by the first and second attention heads in the attention-based model 204 or the transformer network/block may be switched or swapped between the two dimensions of feature and time in the latent space 208 so that the AI-based models as described herein are trained or applied to respond to a wide variety of contextual, temporal or latent relations among or between values or features alongside the time axis/dimension as well as the features axis/dimension in the latent space 208. These (different types of) attentions or attention scores or attention layers can be combined into soft weights and further processed into overall output features generated by the attention-based model 204 or the feedforward network/block therein.

### 3.7. CAR NETWORK

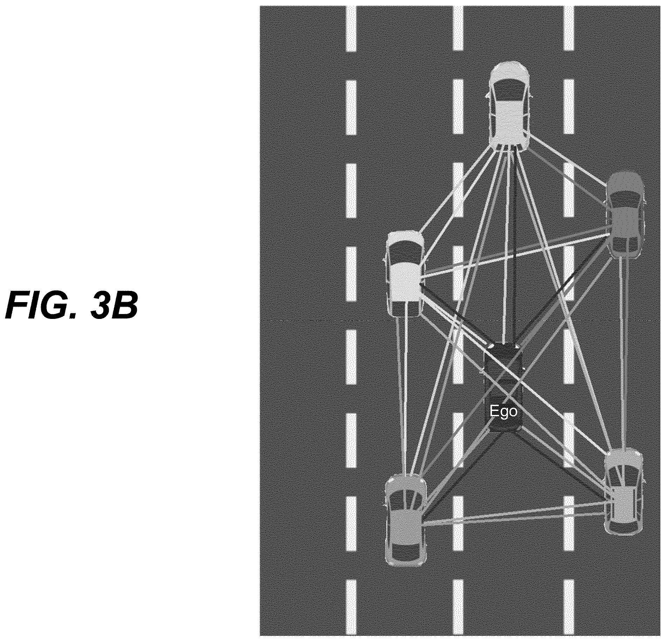

FIG. 3B illustrates an example car network graph that may be rendered or displayed to the user/operator of the vehicle or ego. The car network graph may be rendered or displayed based on a car network matrix generated by the MLP network/block 206-4.

As shown in FIG. 3B, the agent corresponding to the vehicle or ego may be (e.g., graphically, etc.) represented as a black vehicle in the car network graph, while additional agents corresponding to other vehicles within the same scene or on the same road section with the vehicle/ego may be (e.g., graphically, etc.) represented as gray vehicles in the car network graph.

Positions of some or all of the non-ego vehicles relative to the position of the ego vehicle at any given time (e.g., the current time, in realtime, in near realtime, etc.) may be determined by the AI tactical planner 104 and/or the travel assistant 108 based at least in part on realtime or near realtime observations, sensory and/or non-sensory data collected by the sensor stack or system deployed with the vehicle or ego. The positions of the other vehicles may be expressed as (x, y) positions in a Cartesian coordinate system, which may be co-moving with the vehicle or ego. Hence, the positions of the other vehicles may represent relative positions of the vehicle in reference to the position (e.g., (0,0), etc.) of the vehicle or ego.

As illustrated in FIG. 3B, a line may be drawn between any pair of vehicles among the vehicles represented in the car network graph. Each such line connecting a pair of vehicles may be visually indicated or rendered with a length corresponding to a predicted Euclidean distance between the two vehicles as generated by the (car network) MLP network 206-4 designated or trained to make car network matrixes as prediction targets. In some operational scenarios, an AI-based system as described herein may implement or enforce a maximum vehicle limit on the total number of visible vehicles in a given state or at a given time point (e.g., the current time point, in real time, in near real time, etc.). In a non-limiting example, the car network graph may include a maximum of twenty (20) additional vehicles plus the ego vehicle, or maximum 21 vehicles in total.

Hence, the MLP network 206-4 can be trained and/or applied to generate a predicted (or predictive) 21-by-21 distance matrix as a car network matrix in a given state or at a given time point. In the model training phase, the predicted distance matrix may be compared against the actual ground truth Euclidean distances among or between the cars. A loss (or error or objective) function value such as the Mean Squared Error (MSE) value may be computed between the predicted distances and the actual distances in the ground truth. The loss function value may be used for error backpropagation to adjust operational parameter values such as weights, biases, etc., associated with the artificial neural networks used or included in the system or the AI models therein.

The in-vehicle AI-based system deployed with the ego vehicle may implement an (ego) agent to control or operate the ego vehicle, whereas other vehicles or other agents for the other vehicles around the ego vehicle may be observed or understood by the AI-based system or the ego agent through the target predictions generated by the AI models implemented in the AI-based system.

The ego agent, as implemented by the AI-based system or the transformers or the MLP networks therein, can operate with or by the travel assistant 108 of FIG. 1 to produce or carry out vehicle navigation commands for the travel assistant (or low-level vehicle controllers therein) to take corresponding actions.

Many benefits may be derived from this predicted distance matrix generated using the AI models. For example, the predicted distance matrix can be used to enhance comprehension or awareness of the ego vehicle or the ego agent with respect to the other vehicles (or the other (neighboring) agents) around the ego vehicle.

In particular, the predicted distance matrix can be used by the ego agent to understand the present or impending distances between each agent and others, thereby providing overall enhanced spatial awareness on the road section on which the ego vehicle is traveling. The predicted distance matrix allows the ego agent to understand, monitor or track not only its own distances to the other vehicles but also another vehicle's distances to other vehicles.

This enhanced or heightened spatial awareness for the scene or road section can be valuable across a variety of challenges that the ego agent may face. For example, predictions and vehicular actions taken or advised by the AI-based system as described herein can take into account the understandings from the perspective of the ego vehicle as well as the perspectives of other vehicles for the purpose of achieving a relatively high safety for all of these vehicles.

### 3.8. TRAJECTORY/POSITION

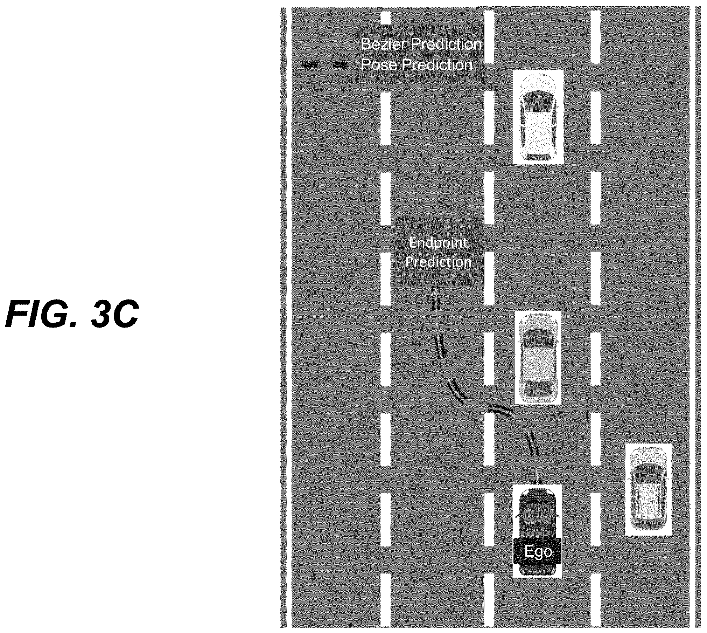

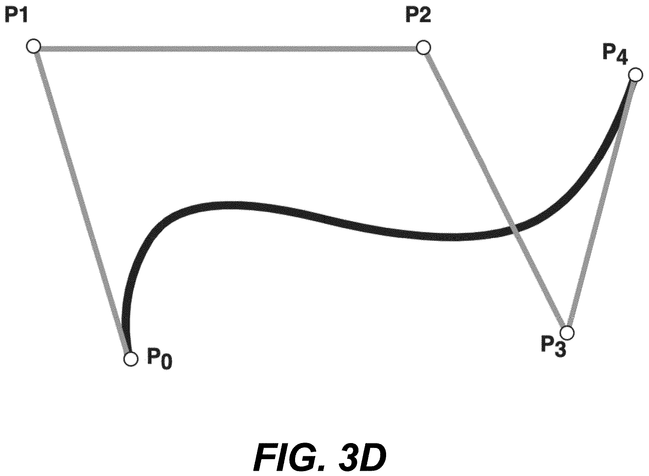

FIG. 3C and FIG. 3D illustrate example trajectory/position related graphs that may be determined, rendered or displayed to the user/operator of the vehicle or ego. The graphs may be determined, rendered or displayed based on trajectory/position predictions generated by the trajectory/position MLP network/block 206-1.

In some operational scenarios, an AI-based system as described herein may be implemented to construct or determine a future or upcoming trajectory of the vehicle or ego using Bezier curve predictions. More specifically, the AI-based models or the MLP network/block 206-1 therein may be trained or applied to predict a plurality of (e.g., eight, etc.) control position values representing a plurality of (e.g., four, etc.) control points in a Bezier curve representing the trajectory of the vehicle or ego. In operational scenarios in which a Cartesian coordinate system is used, both x and y coordinates for the Bezier curve or points thereon may be parametrized with time t as a curve parameter.

As illustrated in FIG. 3D, in some operational scenarios, the plurality of control points may be respectively denoted as P0, P1, P2, P3, P4, where a first control point P0 representing the ego vehicle is fixed at (reference) position values (0, 0) in a Cartesian coordinate system co-moving with the ego vehicle.

Position values (P1-P4 = 2 * 4 = 8 values) of the other control points (P1, P2, P3, P4) are predicted or generated by the MLP network/block 206-1 using a combination of output features of the image-based model 202 and the attention-based model 204.

Given the first control point P1 and all the other predicted control points (P1, P2, P3, P4), a quartic Bezier function or curve illustrated in FIG. 3D as a thick black curve from P0 to P4 may be produced or determined by the AI-based system. In some operational scenarios, this curve or the corresponding predicted trajectory of the ego vehicle covers a specific (e.g., fixed, etc.) time window (e.g., 2.5 seconds long, 5 seconds long, etc.) into the future. As shown in FIG. 3D, some of the control points (P1, P2, P3) as predicted by the MLP network 206-1 may not correspond to - or may not coincide with - predicted positions of the ego vehicle. Rather, these points are control points used to construct the Bezier curve as the predicted trajectory. By way of the Bezier curve or predicted trajectory, future positions of the ego vehicle may be determined or generated.

In some operational scenarios, an overall curve or trajectory of the ego vehicle as determined by the control points - e.g., for a lane change operation, etc. - may be contiguously and non-overlappingly divided into spatial segments each covering an equal time interval (e.g., 2.5 seconds, 2500 milliseconds). Each of these spatial segments may be predicted as a Bezier curve or trajectory based on a respective plurality of control points. Each of these spatial segments may be further spaced apart or partitioned by time rather than distance into a plurality of (e.g., five, etc.) poses. By way of illustration but not limitation, a predicted or constructed Bezier curve/trajectory covering 2.5 seconds may be further divided into five poses, resulting in each pose being separated by a 500 ms interval extending into the future.

Many benefits may be derived from this predicted trajectory of the ego vehicle generated using the AI models. For example, the future dynamics of the ego vehicle may be understood better than otherwise. This enables making relatively timely and accurate decisions for vehicle propulsion operations. Instead of simply placing mechanical constraints based on a single predicted pose, a predicted Bezier curve or trajectory covering or indicating multiple future poses of the vehicle offers a relatively deep and broad understanding of the upcoming propulsion operations beyond what could be provided by such single predicted pose. As a result, the vehicle propulsion operations of the ego vehicle can be operated or carried relatively accurately with relatively high mechanical performance, thereby improving overall vehicle propulsion operations and results.

### 4.0. EXAMPLE PROCESS FLOWS

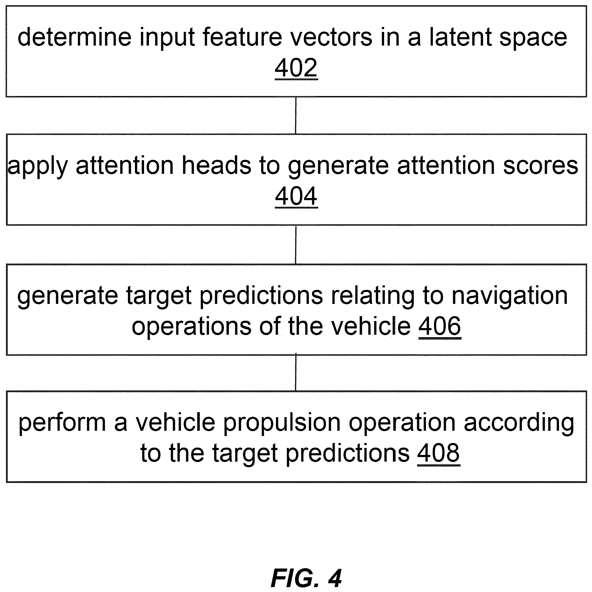

FIG. 4 illustrates an example process flow 400 according to an embodiment. In some embodiments, one or more computing devices or components may perform this process flow. In block 402, an AI-based system as described herein determines, from a plurality of physical object observations derived from sensor-acquired data and non-sensor-acquired data collected for a vehicle, a plurality of input feature vectors in a latent space of three dimensions. The three dimensions include a time dimension, a feature dimension and an embedding size dimension.

In block 404, the AI-based system applies a plurality of attention heads implemented in one or more transformer networks of an artificial intelligence (AI) based system to the input feature vectors in the latent space to generate attention scores forming a plurality of attention layers.

In block 406, the AI-based system generates, based at least in part on the attention scores in the plurality of attention layers, one or more target predictions relating to navigation operations of the vehicle.

In block 408, the AI-based system interacts with a driver assistant sub-system of the vehicle to cause a vehicle propulsion operation to be performed in accordance with the one or more target predictions.

In an embodiment, the plurality of attention heads includes a first attention head configured to apply first self-attention to the plurality of input feature vectors across the time dimension of the latent space and a second attention head configured to concurrently apply second self-attention to the plurality of input feature vectors across the feature dimension of the latent space.

In an embodiment, the AI based system operates with a computer implemented traffic assistant to cause one or more vehicle propulsion operations to be controlled based at least in part on one or more of vehicle velocity predictions or lane changes for the vehicle in the one or more target predictions.

In an embodiment, the sensor-acquired data is generated with a sensor stack deployed with the vehicle; the sensor stack includes one or more of: in-vehicle cameras, image sensors, non-image sensors, radars, LIDARs, ultrasonic sensors, infrared sensors, etc.

In an embodiment, the non-sensor-acquired data includes one or more lane images.

In an embodiment, the one or more target predictions are generated by one or more multi-layer perceptron neural networks based at least in part on the attention scores forming the plurality of attention layers as generated by the plurality of attention heads of the one or more transformer neural networks.

In an embodiment, one or both of a car network graph in reference to the vehicle or a trajectory of the vehicle is generated based at least in part on the one or more target predictions.

In an embodiment, a computing device is configured to perform any of the foregoing methods. In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

In an embodiment, a computing device comprising one or more processors and one or more storage media storing a set of instructions which, when executed by the one or more processors, cause performance of any of the foregoing methods.

Other examples of these and other embodiments are found throughout this disclosure. Note that, although separate embodiments are discussed herein, any combination of embodiments and/or partial embodiments discussed herein may be combined to form further embodiments.

### 5.0. IMPLEMENTATION MECHANISM-HARDWARE OVERVIEW

According to one embodiment, the techniques described herein are implemented by one or more special-purpose computing devices. The special-purpose computing devices may be desktop computer systems, portable computer systems, handheld devices, smartphones, media devices, gaming consoles, networking devices, or any other device that incorporates hard-wired and/or program logic to implement the techniques. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques.

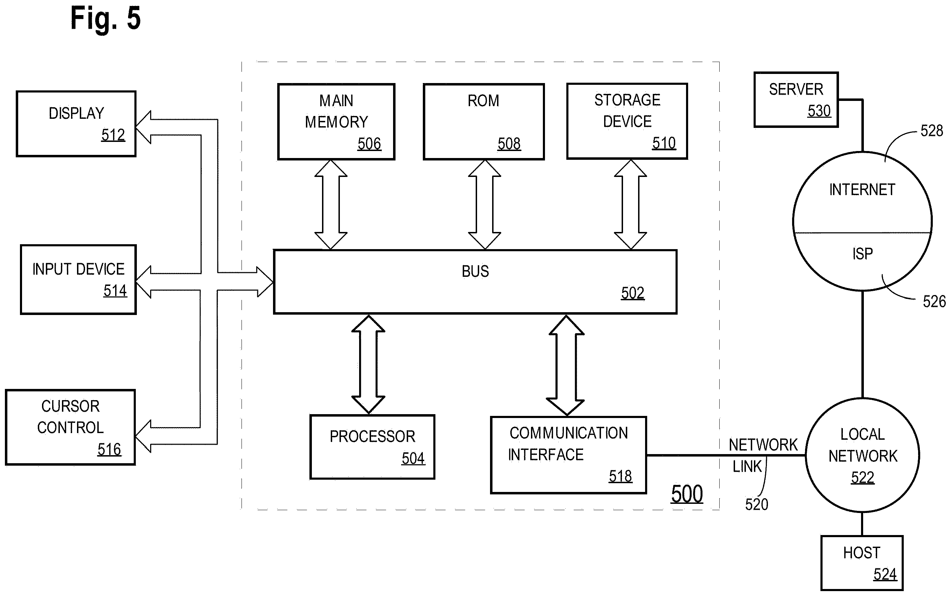

FIG. 5 is a block diagram that illustrates a computer system 500 utilized in implementing the above-described techniques, according to an embodiment. Computer system 500 may be, for example, a desktop computing device, laptop computing device, tablet, smartphone, server appliance, computing main image, multimedia device, handheld device, networking apparatus, or any other suitable device.

Computer system 500 includes one or more busses 502 or other communication mechanism for communicating information, and one or more hardware processors 504 coupled with busses 502 for processing information. Hardware processors 504 may be, for example, a general purpose microprocessor. Busses 502 may include various internal and/or external components, including, without limitation, internal processor or memory busses, a Serial ATA bus, a PCI Express bus, a Universal Serial Bus, a HyperTransport bus, an Infiniband bus, and/or any other suitable wired or wireless communication channel.

Computer system 500 also includes a main memory 506, such as a random access memory (RAM) or other dynamic or volatile storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes one or more read only memories (ROM) 508 or other static storage devices coupled to bus 502 for storing static information and instructions for processor 504. One or more storage devices 510, such as a solid-state drive (SSD), magnetic disk, optical disk, or other suitable non-volatile storage device, is provided and coupled to bus 502 for storing information and instructions.

Computer system 500 may be coupled via bus 502 to one or more displays 512 for presenting information to a computer user. For instance, computer system 500 may be connected via an High-Definition Multimedia Interface (HDMI) cable or other suitable cabling to a Liquid Crystal Display (LCD) monitor, and/or via a wireless connection such as peer-to-peer Wi-Fi Direct connection to a Light-Emitting Diode (LED) television. Other examples of suitable types of displays 512 may include, without limitation, plasma display devices, projectors, cathode ray tube (CRT) monitors, electronic paper, virtual reality headsets, braille terminal, and/or any other suitable device for outputting information to a computer user. In an embodiment, any suitable type of output device, such as, for instance, an audio speaker or printer, may be utilized instead of a display 512.

In an embodiment, output to display 512 may be accelerated by one or more graphics processing unit (GPUs) in computer system 500. A GPU may be, for example, a highly parallelized, multi-core floating point processing unit highly optimized to perform computing operations related to the display of graphics data, 3D data, and/or multimedia. In addition to computing image and/or video data directly for output to display 512, a GPU may also be used to render imagery or other video data off-screen, and read that data back into a program for off-screen image processing with very high performance. Various other computing tasks may be off-loaded from the processor 504 to the GPU.

One or more input devices 514 are coupled to bus 502 for communicating information and command selections to processor 504. One example of an input device 514 is a keyboard, including alphanumeric and other keys. Another type of user input device 514 is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane. Yet other examples of suitable input devices 514 include a touch-screen panel affixed to a display 512, cameras, microphones, accelerometers, motion detectors, and/or other sensors. In an embodiment, a network-based input device 514 may be utilized. In such an embodiment, user input and/or other information or commands may be relayed via routers and/or switches on a Local Area Network (LAN) or other suitable shared network, or via a peer-to-peer network, from the input device 514 to a network link 520 on the computer system 500.

A computer system 500 may implement techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and use a modem to send the instructions over a network, such as a cable network or cellular network, as modulated signals. A modem local to computer system 500 can receive the data on the network and demodulate the signal to decode the transmitted instructions. Appropriate circuitry can then place the data on bus 502. Bus 502 carries the data to main memory 505, from which processor 504 retrieves and executes the instructions. The instructions received by main memory 506 may optionally be stored on storage device 510 either before or after execution by processor 504.

A computer system 500 may also include, in an embodiment, one or more communication interfaces 518 coupled to bus 502. A communication interface 518 provides a data communication coupling, typically two-way, to a network link 520 that is connected to a local network 522. For example, a communication interface 518 may be an integrated services digital network (ISDN) card, cable modem, satellite modem, or a modem to provide a data communication connection to a corresponding type of telephone line. As another example, the one or more communication interfaces 518 may include a local area network (LAN) card to provide a data communication connection to a compatible LAN. As yet another example, the one or more communication interfaces 518 may include a wireless network interface controller, such as a 802.11-based controller, Bluetooth controller, Long Term Evolution (LTE) modem, and/or other types of wireless interfaces. In any such implementation, communication interface 518 sends and receives electrical, electromagnetic, or optical signals that carry digital data streams representing various types of information.

Network link 520 typically provides data communication through one or more networks to other data devices. For example, network link 520 may provide a connection through local network 522 to a host computer 524 or to data equipment operated by a Service Provider 526. Service Provider 526, which may for example be an Internet Service Provider (ISP), in turn provides data communication services through a wide area network, such as the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

In an embodiment, computer system 500 can send messages and receive data, including program code and/or other types of instructions, through the network(s), network link 520, and communication interface 518. In the Internet example, a server 530 might transmit a requested code for an application program through Internet 528, ISP 526, local network 522 and communication interface 518. The received code may be executed by processor 504 as it is received, and/or stored in storage device 510, or other non-volatile storage for later execution. As another example, information received via a network link 520 may be interpreted and/or processed by a software component of the computer system 500, such as a web browser, application, or server, which in turn issues instructions based thereon to a processor 504, possibly via an operating system and/or other intermediate layers of software components.

In an embodiment, some or all of the systems described herein may be or comprise server computer systems, including one or more computer systems 500 that collectively implement various components of the system as a set of server-side processes. The server computer systems may include web server, application server, database server, and/or other conventional server components that certain above-described components utilize to provide the described functionality. The server computer systems may receive network-based communications comprising input data from any of a variety of sources, including without limitation user-operated client computing devices such as desktop computers, tablets, or smartphones, remote sensing devices, and/or other server computer systems.

In an embodiment, certain server components may be implemented in full or in part using "cloud"-based components that are coupled to the systems by one or more networks, such as the Internet. The cloud-based components may expose interfaces by which they provide processing, storage, software, and/or other resources to other components of the systems. In an embodiment, the cloud-based components may be implemented by third-party entities, on behalf of another entity for whom the components are deployed. In other embodiments, however, the described systems may be implemented entirely by computer systems owned and operated by a single entity.

In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

### 6.0. EXTENSIONS AND ALTERNATIVES

As used herein, the terms "first," "second," "certain," and "particular" are used as naming conventions to distinguish queries, plans, representations, steps, objects, devices, or other items from each other, so that these items may be referenced after they have been introduced. Unless otherwise specified herein, the use of these terms does not imply an ordering, timing, or any other characteristic of the referenced items.

In the drawings, the various components are depicted as being communicatively coupled to various other components by arrows. These arrows illustrate only certain examples of information flows between the components. Neither the direction of the arrows nor the lack of arrow lines between certain components should be interpreted as indicating the existence or absence of communication between the certain components themselves. Indeed, each component may feature a suitable communication interface by which the component may become communicatively coupled to other components as needed to accomplish any of the functions described herein.

In the foregoing specification, embodiments of the disclosure have been described with reference to numerous specific details that may vary from implementation to implementation. Thus, the sole and exclusive indicator of what is the disclosure, and is intended by the applicants to be the disclosure, is the set of claims that issue from this application, in the specific form in which such claims issue, including any subsequent correction. In this regard, although specific claim dependencies are set out in the claims of this application, it is to be noted that the features of the dependent claims of this application may be combined as appropriate with the features of other dependent claims and with the features of the independent claims of this application, and not merely according to the specific dependencies recited in the set of claims. Moreover, although separate embodiments are discussed herein, any combination of embodiments and/or partial embodiments discussed herein may be combined to form further embodiments.

Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A method comprising:
determining, from a plurality of physical object observations derived from sensor-acquired data and non-sensor-acquired data collected for a vehicle, a plurality of input feature vectors in a latent space of three dimensions, wherein the three dimensions include a time dimension, a feature dimension and an embedding size dimension;
applying a plurality of attention heads implemented in one or more transformer networks of an artificial intelligence (AI) based system to the input feature vectors in the latent space to generate attention scores forming a plurality of attention layers;
generating, based at least in part on the attention scores in the plurality of attention layers, one or more target predictions relating to navigation operations of the vehicle;
interacting with a driver assistant sub-system of the vehicle to cause a vehicle propulsion operation to be performed in accordance with the one or more target predictions.

2. The method of Claim 1, wherein the plurality of attention heads includes a first attention head configured to apply first self-attention to the plurality of input feature vectors across the time dimension of the latent space and a second attention head configured to concurrently apply second self-attention to the plurality of input feature vectors across the feature dimension of the latent space.

3. The method of Claim 1, wherein the AI based system operates with a computer implemented traffic assistant to cause one or more vehicle propulsion operations to be controlled based at least in part on one or more of vehicle velocity predictions or lane changes for the vehicle in the one or more target predictions.

4. The method of Claim 1, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

5. The method of Claim 1, wherein the non-sensor-acquired data includes one or more lane images.

6. The method of Claim 1, wherein the one or more target predictions are generated by one or more multi-layer perceptron neural networks based at least in part on the attention scores forming the plurality of attention layers as generated by the plurality of attention heads of the one or more transformer neural networks.

7. The method of Claim 1, wherein one or both of a car network graph in reference to the vehicle or a trajectory of the vehicle is generated based at least in part on the one or more target predictions.

8. A system, comprising: one or more computing processors; one or more non-transitory computer readable media storing a program of instructions that is executable by the one or more computing processors to perform:
determining, from a plurality of physical object observations derived from sensor-acquired data and non-sensor-acquired data collected for a vehicle, a plurality of input feature vectors in a latent space of three dimensions, wherein the three dimensions include a time dimension, a feature dimension and an embedding size dimension;
applying a plurality of attention heads implemented in one or more transformer networks of an artificial intelligence (AI) based system to the input feature vectors in the latent space to generate attention scores forming a plurality of attention layers;
generating, based at least in part on the attention scores in the plurality of attention layers, one or more target predictions relating to navigation operations of the vehicle;
interacting with a driver assistant sub-system of the vehicle to cause a vehicle propulsion operation to be performed in accordance with the one or more target predictions.

9. The system of Claim 8, wherein the plurality of attention heads includes a first attention head configured to apply first self-attention to the plurality of input feature vectors across the time dimension of the latent space and a second attention head configured to concurrently apply second self-attention to the plurality of input feature vectors across the feature dimension of the latent space.

10. The system of Claim 8, wherein the AI based system operates with a computer implemented traffic assistant to cause one or more vehicle propulsion operations to be controlled based at least in part on one or more of vehicle velocity predictions or lane changes for the vehicle in the one or more target predictions.

11. The system of Claim 8, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

12. The system of Claim 8, wherein the non-sensor-acquired data includes one or more lane images.

13. The system of Claim 8, wherein the one or more target predictions are generated by one or more multi-layer perceptron neural networks based at least in part on the attention scores forming the plurality of attention layers as generated by the plurality of attention heads of the one or more transformer neural networks.

14. The system of Claim 8, wherein one or both of a car network graph in reference to the vehicle or a trajectory of the vehicle is generated based at least in part on the one or more target predictions.

15. One or more non-transitory computer readable media storing a program of instructions that is executable by one or more computing processors to perform:
collecting one or more sets of velocity data originating from one or more vehicles traversing a road segment, each set of velocity data in the one or more sets of velocity data corresponding to a respective vehicle in the one or more vehicles;
analyzing the one or more sets of velocity data to generate speed check analytical data for the road segment;
identifying, based at least in part on the speed check analytical data, a speed check zone on the road segment.
determining, from a plurality of physical object observations derived from sensor-acquired data and non-sensor-acquired data collected for a vehicle, a plurality of input feature vectors in a latent space of three dimensions, wherein the three dimensions include a time dimension, a feature dimension and an embedding size dimension;
applying a plurality of attention heads implemented in one or more transformer networks of an artificial intelligence (AI) based system to the input feature vectors in the latent space to generate attention scores forming a plurality of attention layers;
generating, based at least in part on the attention scores in the plurality of attention layers, one or more target predictions relating to navigation operations of the vehicle;
interacting with a driver assistant sub-system of the vehicle to cause a vehicle propulsion operation to be performed in accordance with the one or more target predictions.

16. The media of Claim 15, wherein the plurality of attention heads includes a first attention head configured to apply first self-attention to the plurality of input feature vectors across the time dimension of the latent space and a second attention head configured to concurrently apply second self-attention to the plurality of input feature vectors across the feature dimension of the latent space.

17. The media of Claim 15, wherein the AI based system operates with a computer implemented traffic assistant to cause one or more vehicle propulsion operations to be controlled based at least in part on one or more of vehicle velocity predictions or lane changes for the vehicle in the one or more target predictions.

18. The media of Claim 15, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

19. The media of Claim 15, wherein the non-sensor-acquired data includes one or more lane images.

20. The media of Claim 15, wherein the one or more target predictions are generated by one or more multi-layer perceptron neural networks based at least in part on the attention scores forming the plurality of attention layers as generated by the plurality of attention heads of the one or more transformer neural networks.

21. The media of Claim 15, wherein one or both of a car network graph in reference to the vehicle or a trajectory of the vehicle is generated based at least in part on the one or more target predictions.

## Amended claims

### Amended claims in accordance with Rule 137(2) EPC.

1. A method comprising:
determining (402), from a plurality of physical object observations derived from sensor-acquired data and non-sensor-acquired data collected for a vehicle, a plurality of input feature vectors in a latent space (208) of three dimensions, wherein the three dimensions include a time dimension, a feature dimension and an embedding size dimension;
applying (404) a plurality of attention heads implemented in one or more transformer networks of an artificial intelligence, AI, based system to the input feature vectors in the latent space (208) to generate attention scores forming a plurality of attention layers, wherein the plurality of attention heads includes a first attention head configured to apply first self-attention to the plurality of input feature vectors across the time dimension of the latent space (208) and a second attention head configured to concurrently apply second self-attention to the plurality of input feature vectors across the feature dimension of the latent space (208);
generating (406), based at least in part on the attention scores in the plurality of attention layers, one or more target predictions relating to navigation operations of the vehicle; and
interacting (408) with a driver assistant sub-system of the vehicle to cause a vehicle propulsion operation to be performed in accordance with the one or more target predictions.

2. The method of Claim 1, wherein the AI-based system operates with a computer implemented traffic assistant (108) to cause one or more vehicle propulsion operations to be controlled based at least in part on one or more of vehicle velocity predictions or lane changes for the vehicle in the one or more target predictions.

3. The method of Claim 1, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

4. The method of Claim 1, wherein the non-sensor-acquired data includes one or more lane images.

5. The method of Claim 1, wherein the one or more target predictions are generated by one or more multi-layer perceptron neural networks (206) based at least in part on the attention scores forming the plurality of attention layers as generated by the plurality of attention heads of the one or more transformer neural networks.

6. The method of Claim 1, wherein one or both of a car network graph in reference to the vehicle or a trajectory of the vehicle is generated based at least in part on the one or more target predictions.

7. A system (500), comprising: one or more computing processors (504); one or more non-transitory computer readable media (508, 510) storing a program of instructions that is executable by the one or more computing processors (504) to perform:
determining (402), from a plurality of physical object observations derived from sensor-acquired data and non-sensor-acquired data collected for a vehicle, a plurality of input feature vectors in a latent space (208) of three dimensions, wherein the three dimensions include a time dimension, a feature dimension and an embedding size dimension;
applying (404) a plurality of attention heads implemented in one or more transformer networks of an artificial intelligence, AI, based system to the input feature vectors in the latent space (208) to generate attention scores forming a plurality of attention layers, wherein the plurality of attention heads includes a first attention head configured to apply first self-attention to the plurality of input feature vectors across the time dimension of the latent space (208) and a second attention head configured to concurrently apply second self-attention to the plurality of input feature vectors across the feature dimension of the latent space (208);
generating (406), based at least in part on the attention scores in the plurality of attention layers, one or more target predictions relating to navigation operations of the vehicle; and
interacting (408) with a driver assistant sub-system of the vehicle to cause a vehicle propulsion operation to be performed in accordance with the one or more target predictions.

8. The system (500) of Claim 7, wherein the AI-based system operates with a computer implemented traffic assistant (108) to cause one or more vehicle propulsion operations to be controlled based at least in part on one or more of vehicle velocity predictions or lane changes for the vehicle in the one or more target predictions.

9. The system (500) of Claim 7, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

10. The system (500) of Claim 7, wherein the non-sensor-acquired data includes one or more lane images.

11. The system (500) of Claim 7, wherein the one or more target predictions are generated by one or more multi-layer perceptron neural networks (206) based at least in part on the attention scores forming the plurality of attention layers as generated by the plurality of attention heads of the one or more transformer neural networks.

12. The system (500) of Claim 7, wherein one or both of a car network graph in reference to the vehicle or a trajectory of the vehicle is generated based at least in part on the one or more target predictions.

13. One or more non-transitory computer readable media (508, 510) storing a program of instructions that is executable by one or more computing processors (504) to perform:
determining (402), from a plurality of physical object observations derived from sensor-acquired data and non-sensor-acquired data collected for a vehicle, a plurality of input feature vectors in a latent space (208) of three dimensions, wherein the three dimensions include a time dimension, a feature dimension and an embedding size dimension;
applying (404) a plurality of attention heads implemented in one or more transformer networks of an artificial intelligence, AI, based system to the input feature vectors in the latent space (208) to generate attention scores forming a plurality of attention layers, wherein the plurality of attention heads includes a first attention head configured to apply first self-attention to the plurality of input feature vectors across the time dimension of the latent space (208) and a second attention head configured to concurrently apply second self-attention to the plurality of input feature vectors across the feature dimension of the latent space (208);
generating (406), based at least in part on the attention scores in the plurality of attention layers, one or more target predictions relating to navigation operations of the vehicle; and
interacting (408) with a driver assistant sub-system of the vehicle to cause a vehicle propulsion operation to be performed in accordance with the one or more target predictions.

14. The media (508, 510) of Claim 13, wherein the AI-based system operates with a computer implemented traffic assistant (108) to cause one or more vehicle propulsion operations to be controlled based at least in part on one or more of vehicle velocity predictions or lane changes for the vehicle in the one or more target predictions.

15. The media (508, 510) of Claim 13, wherein the sensor-acquired data is generated with a sensor stack deployed with the vehicle; wherein the sensor stack includes one or more of: in-vehicle cameras, image sensors, non-image sensors, radars, LIDARs, ultrasonic sensors, or infrared sensors.

16. The media (508, 510) of Claim 13, wherein the non-sensor-acquired data includes one or more lane images.

17. The media (508, 510) of Claim 13, wherein the one or more target predictions are generated by one or more multi-layer perceptron neural networks (206) based at least in part on the attention scores forming the plurality of attention layers as generated by the plurality of attention heads of the one or more transformer neural networks.

18. The media (508, 510) of Claim 13, wherein one or both of a car network graph in reference to the vehicle or a trajectory of the vehicle is generated based at least in part on the one or more target predictions.
